# EUROPEAN PATENT APPLICATION

(11) **EP 2 743 569 A1**
(43) Date of publication of application: **18.06.2014**
(21) Application number: 13176113.2
(22) Date of filing: 11.07.2013
(51) Int. Cl.: F21V 5/04, F21V 7/00

(54) **Luminaire, lamp device, and lens**

(30) Priority: 14.12.2012 JP 2012273944
(71) Applicant: Toshiba Lighting & Technology Corporation, Yokosuka-shi Kanagawa 237-8510 (JP)
(72) Inventor: Ogawa, Kozo, Kanagawa, 237-8510 (JP)
(74) Representative: Willquist, Sofia Ellinor

(57) **Abstract**

According to one embodiment, in a lamp device, a light-emitting section includes an LED chip and sealing resin configured to cover the LED chip. The light-emitting section is mounted on one surface of a substrate. A lens main body section includes an emission section and a light distribution section provided integrally with the emission section. The light distribution section configures a reflection surface, the outer surface of which reflects the light to the emission section. An incident recess includes a lens surface and an incident side surface. The lens surface is opposed to the light-emitting section and guides light emitted from the light-emitting section to the emission section. The incident side surface is configured by a plurality of planar incident plane sections located around the lens surface and adjacent to one another and guides the light emitted from the light-emitting section to the reflection surface of the light distribution section.

## Description

### FIELD

Embodiments described herein relate generally to a luminaire including a lens including an incident recess recessed in a lens body section, a lamp device including the luminaire, and a lens.

### BACKGROUND

In an LED bulb functioning as an LED luminaire of this type, a substrate mounted with an LED functioning as a light source is arranged on a base member and a lens configured to control a luminous intensity distribution of the LED is arranged on the substrate.

In particular, in the case of an LED that emits white light, in general, the LED includes an LED chip functioning as a light-emitting element configured to emit blue light and a resin section configured to cover and seal the LED chip. The resin section includes a yellow phosphor excited by the light emission of the LED chip. In such a configuration, the resin section is arranged in an area wider than the LED chip. Therefore, color unevenness and illuminance unevenness occur between a position opposed to the LED chip and a position near the circumferential edge of the resin section. As a result, color unevenness and illuminance unevenness also occur in the lens and an irradiation surface.

As measures against the color unevenness and the illuminance unevenness, it is conceivable to apply embossing to the lens surface. However, the shape of the embossing changes because of slight deformation or the like of a molding die involved in mass production of the lens, it is not easy to control characteristics of the color unevenness and the illuminance unevenness by the embossing, and the performance of the embossing is not easily stabilized.

### BRIEF DESCRIPTION OF THE DRAWINGS

FIG. 1 is a sectional view showing a part of a lens in a first embodiment;
FIG. 2 is a plan view showing a part of the lens from an optical axis direction;
FIG. 3 is a sectional view showing a luminaire including the lens;
FIG. 4 is a perspective view showing the luminaire;
FIG. 5(a) is a graph showing a relation between the number of divisions by incident plane sections of an incident side surface and a center luminous intensity ratio with respect to the cylindrical incident side surface;
FIG. 5(b) is a graph showing a relation between the number of divisions by the incident plane sections of the incident side surface and a color temperature difference with respect to the center;
FIG. 6 is an explanatory diagram schematically showing a lighting fixture including the luminaire;
FIG. 7 is a sectional view showing a part of a lens in a second embodiment;
FIG. 8 is a plan view showing a part of the lens from an optical axis direction; and
FIG. 9 is a graph showing a relation between emission angles of the lens and relative color temperatures in the embodiments and a comparative example.

### DETAILED DESCRIPTION

According to one embodiment, a luminaire includes a light-emitting module and a lens. The light-emitting module includes a light source and a substrate. The light source includes a light-emitting element and a fluorescent section configured to cover the light-emitting element and excited by light emission from the light-emitting element. The light source is mounted on one surface of the substrate. The lens includes a lens main body section formed by a member having translucency and an incident recess. The lens main body section includes an emission section configured to emit light and a light distribution section provided integrally with the emission section. The light distribution section configures a reflection surface, the outer surface of which reflects the light to the emission section. The incident recess includes a lens surface and an incident side surface and is recessed in the light distribution section of the lens main body section. The lens surface is opposed to the light source and guides light emitted from the light source to the emission section. The incident side surface is configured by a plurality of planar incident plane sections located around the lens surface and adjacent to one another and guides the light emitted from the light source to the reflection surface of the light distribution section.

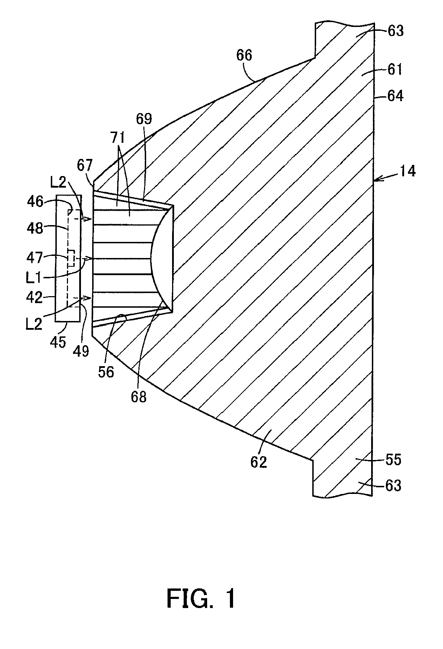

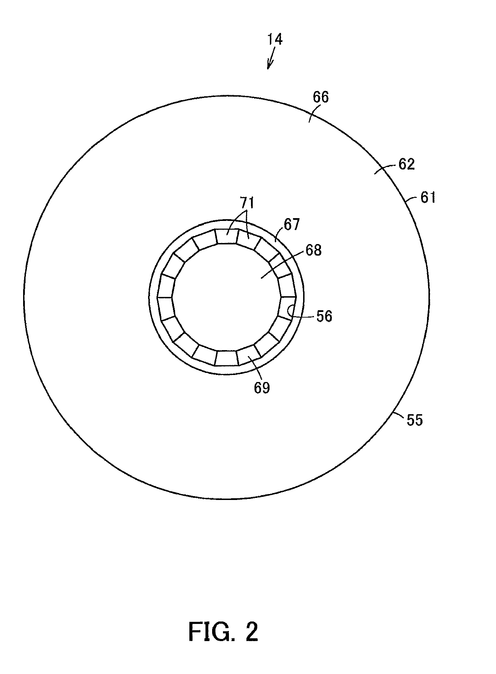

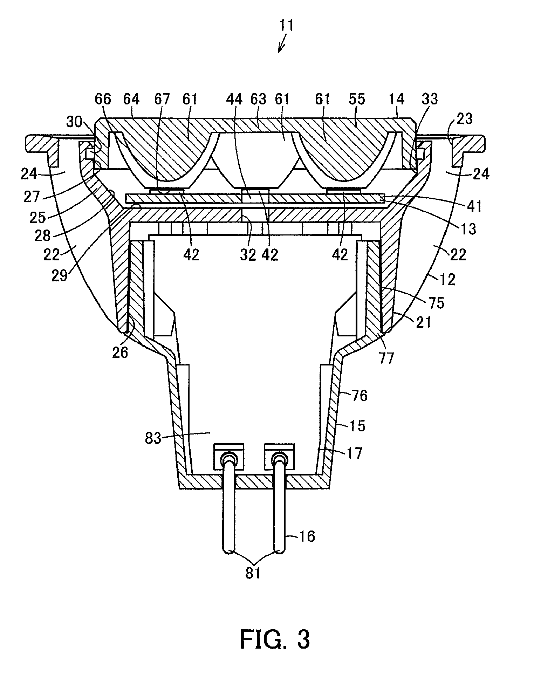

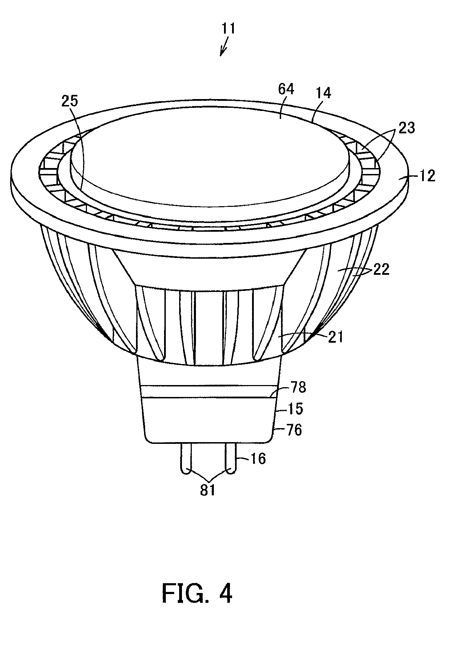

A configuration in a first embodiment is explained below with reference to FIGS. 1 to 6.

In FIGS. 1 to 4, reference numeral 11 denotes a lamp device functioning as a luminaire. The lamp device 11 is an LED lamp including a base body 12, which is a thermal radiator made of metal, a light-emitting module 13 attached to one end side of the base body 12 (one end side of a lamp axis (an optical axis) of the lamp device 11), a lens 14 detachably attached to the one end side of the base body 12 to cover the light-emitting module 13, an insulation cover 15 having insulation properties attached to the other end side of the base body 12, a power-supply terminal 16 provided on the other end side of the insulation cover 15, and a lighting circuit 17 housed in the insulation cover 15.

The base body 12 is integrally formed in a substantially semispherical shape by a metal material such as aluminum excellent in thermal conductivity. A body section 21 opening toward the other end side is formed in the center area of the base body 12. A plurality of thermal radiation fins 22 extending along a lamp axis direction are formed to protrude radially around the body section 21. The thermal radiation fins 22 are formed to incline such that a protrusion amount in the radial direction gradually increases from the other end side to the one end side of the base body 12. The thermal radiation fins 22 are configured to approximate to the shape of a so-called Ref Lamp.

A plurality of ventilation openings 23 are opened to be separated from one another in the circumferential direction on the surface on the one end side of the base body 12. These ventilation openings 23 communicate with thermal radiation fins 22 adjacent to one another in the circumferential direction and form ventilation paths 24. Therefore, it is possible to circulate cooling air along the outer circumferential surface of the base body 12 among the thermal radiation fins 22 to cool the base body 12 and effectively radiate heat via the ventilation openings 23.

On one end side of the body section 21 of the base body 12, a fitting recess 25, in which the lens 14 is fit, is recessed to open to the one end side in an inward position of the ventilation openings 23. On the other end side of the body section 21, a recess 26, in which the insulation cover 15 is fit, is recessed to open to the other end side.

The circumference of the fitting recess 25 is divided by a cylindrical surface-like side surface 27 communicating with the one end side of the base body 12 (the body section 21), an inclined surface 28 continuous to the other end side of the side surface 27 and inclined to be gradually reduced in diameter to the other end side, and a planar attachment surface 29 continuous to the other end side of the inclined surface 28 and attached with the light-emitting module 13. On the side surface 27, a fitting groove section 30 is recessed over the entire circumference. A not-shown annular seal member configured to close a gap between the outer circumference of the lens 14 fit in the fitting recess 25 and the side surface 27 is fit in the fitting groove section 30. On the attachment surface 29, a wiring hole 32 through which a connector and a lead wire, which electrically connect the lighting circuit 17 and the light-emitting module 13 side, pass, is opened in the center and a not-shown attachment hole for fixing the light-emitting module 13 using a screw or the like is formed. Further, a position where the side surface 27 and the inclined surface 28 are continuous is a positioning section 33 for positioning the lens 14.

The light-emitting module 13 includes a rectangular substrate 41 formed of a metal material such as iron or aluminum or an insulating material such as ceramic and a plurality of light-emitting sections 42 arranged on a mounting surface, which is one surface on one end side of the substrate 41, and functioning as light sources. The substrate 41 is thermally connected, attached, and fixed to the attachment surface 29 of the base body 12 by a plurality of not-shown screws in a state in which the substrate 41 is insulated via, for example, a not-shown insulation sheet, which is a thin sheet, having insulation properties, thermal conductivity, and elasticity made of silicone resin, silicone rubber, or the like. Further, a through-hole 44 communicating with the wiring hole 32 of the base body 12 is opened in the center of the substrate 41.

The light-emitting sections 42 are, for example, not-shown SMDs (Surface Mount Devices) attached with connection terminals mounted on a metal surface of the substrate 41 to be spaced apart from one another. LED elements, that is, LED chips 47, which are semiconductor light-emitting elements functioning as, for example, light-emitting elements (solid-state light-emitting elements), are mounted in attachment recesses 46, which are provided in flat thin rectangular parallelepiped housing sections 45, and electrically connected to the connection terminals. Sealing resin 48 functioning as a fluorescent section is filled on the inner side of the attachment recesses 46 to seal the LED chips 47 and cover the LED chips 47. Therefore, the sealing resin 48 of the light-emitting sections 42 is formed to spread to an area wider than the LED chips 47 when viewed from the lamp axis direction. For example, the LED chips 47 emit blue light. The sealing resin 48 is transparent resin such as a silicone resin containing phosphors that are excited by the blue light emitted by the LED chips 47 to mainly emit yellow light. Therefore, the surfaces of the sealing resin 48, which are the surfaces of the light-emitting sections 42, are light-emitting surfaces 49. Whitish illumination light is radiated from the light-emitting surfaces 49. In this embodiment, lambertian distribution light is radiated. The light-emitting sections 42 may be, for example, a so-called COB (Chip On Board) module in which an entire plurality of LED chips 47 mounted on the metal surface of the substrate 41 in a matrix shape or the like are surrounded by a bank-like surrounding section and the inner side of the surrounding section is filled with the sealing resin 48.

A not-shown wiring pattern is formed on the mounting surface of the substrate 41 in a state insulated from the substrate 41. The connection terminals of the light-emitting sections 42 are electrically connected to the wiring pattern. The wiring pattern is electrically connected to the lighting circuit 17 via a not-shown connector attached on the mounting surface of the substrate 41.

The lens 14 is integrally molded by a member such as synthetic resin having translucency or glass. The lens 14 includes lens main body sections 55 and incident recesses 56 recessed in the lens main body sections 55. The lens 14 is a lens of a total reflection type that emits substantially all lights emitted from the light-emitting sections 42.

The lens main body sections 55 respectively integrally include, to correspond to the light-emitting sections 42, columnar emission sections 61 and spheroid-like light distribution sections 62 located on a lamp axis direction back side of the emission sections 61, i.e., the light-emitting module 13 side. In the lens main body sections 55, the emission sections 61 are integrally coupled to each other via a coupling section 63. The light distribution sections 62 are separated from each other to correspond to the positions of the light-emitting sections 42.

The emission sections 61 are sections configured to emit lights emitted from the light-emitting sections 42. Outer surfaces (end faces) of the emission sections 61 on the opposite side of the light distribution sections 62 are planar emission surfaces 64 extending along a direction crossing (orthogonal to) the lamp axis.

The light distribution sections 62 are formed to be gradually expanded in diameter from the light-emitting sections 42 side to the emission sections 61 and are continuous to the emission sections 61. The outer circumferential surfaces of the light distribution sections 62 are curved surface (spheroid or paraboloid)-like reflection surfaces 66 configured to reflect the lights to the emission surfaces 64 of the emission sections 61. The center axes of the light distribution sections 62 are aligned coaxially with the centers of the LED chips 47 of the light-emitting sections 42. The outer surfaces (the end faces) of the light distribution sections 62 opposed to the light-emitting sections 42 via slight gaps are planar opposed surfaces 67 extending along the direction crossing (orthogonal to) the lamp axis.

On the other hand, the incident recesses 56 are recessed in the centers of the opposed surfaces 67 in positions opposed to the light-emitting sections 42 of the light distribution sections 62. The incident recesses 56 include lens surfaces 68 opposed to the light-emitting sections 42 and configured to guide the lights emitted from the light-emitting sections 42 to the emission sections 61 and incident side surfaces 69 located to be continuous to the circumferences of the lens surfaces 68 and configured to guide the lights emitted from the light-emitting sections 42 to the reflection surfaces 66 of the light distribution sections 62.

The lens surfaces 68 are located at ends on the emission sections 61 side of the incident recesses 56 and formed along the direction crossing the lamp axis. The lens surfaces 68 are projected to the light-emitting sections 42 side. In this embodiment, the lens surfaces 68 are formed in a spheroid shape or a paraboloid shape. Angles, curvatures, and the like of the lens surfaces 68 are respectively adjusted according to a refractive index and the like of a member configuring the lens main body sections 55 to guide substantially all incident lights emitted from the light-emitting sections 42 to the emission sections 61 (the emission surfaces 64) without guiding the lights to the reflection surfaces 66.

The incident side surfaces 69 are inclined from the opposed surfaces 67 side, which is one end side, to the lens surfaces 68 side, which is the other end side, to gradually approach the lamp axis. That is, the incident recesses 56 are reduced in diameter from the opposed surfaces 67 side, which is an incident side of the lights emitted from the light-emitting sections 42, to the emission sections 61 side, which is an emission side of the lights. An inclination angle of the incident side surfaces 69 with respect to the opposed surfaces 67 (surfaces orthogonal to the lens 14, in particular, the light distribution sections 62 and the lamp axis) is set to a predetermined angle, for example, equal to or larger than 80° and smaller than 90° to totally reflect incident lights on the reflection surfaces 66 and taking into account a draft angle for easily and surely pulling out the lens 14 from a molding die during molding. Angles and the like of the incident side surfaces 69 are respectively adjusted according to the refractive index and the like of the member configuring the lens main body section 55 to guide all the incident lights emitted from the light-emitting sections 42 to the reflection surfaces 66 without guiding the lights to the emission sections 61.

Further, the incident side surface 69 is configured by a plurality of planar incident plane sections 71, which are facets, adjacent to one another in a direction (a circumferential direction) extending along the outer edge of the lens surface 68. The incident side surface 69 is formed in a shape approximate to a cylindrical surface (a truncated conical surface). The incident plane sections 71 are respectively formed in an isosceles trapezoidal shape gradually narrowed from the opposed surface 67 side, which is the light-emitting section 42 side, to the outer edge of the lens surface 68 and having a longitudinal direction in the direction extending along the lamp axis. A continuous position of the incident plane sections 71 adjacent to each other is a bus line of the same cylindrical surface (truncated conical surface). One end side of the incident plane sections 71 is continuous to the opposed surface 67 and the other end side configures the outer edge of the lens surface 68. That is, the lens surface 68 is formed in a substantially regular polygonal shape having five or more sides viewed from the lamp axis direction by the incident plane sections 71. The incident plane sections 71 are adjacent to one another at an obtuse angle larger than 90° and smaller than 180°. In this embodiment, the incident side surface 69 is formed by eighteen incident plane sections 71. The outer circumference (the outer line) of the lens surface 68 is formed in a regular octadodecagon shape. In other words, in this embodiment, the incident side surface 69 is formed in a regular octadodecagon cylindrical shape by the incident plane sections 71.

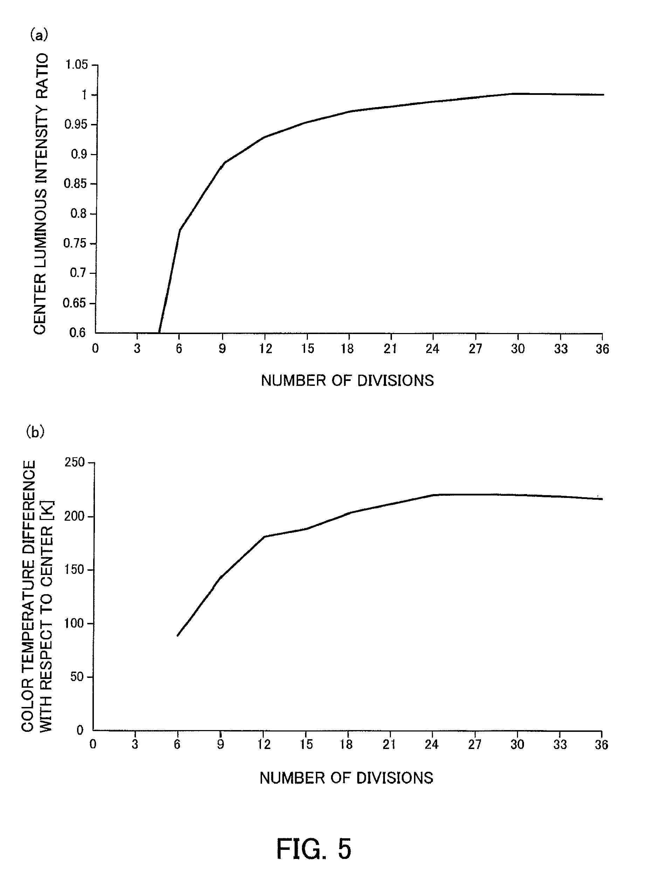

If the number of divisions of the incident side surface 69 by the incident plane sections 71 is too small, center luminous intensity falls. If the number of divisions is too large, an effect of reducing color unevenness is spoiled. For example, as shown in FIG. 5(a), if a center luminous intensity ratio with respect to a cylindrical incident side surface not divided by incident plane sections is selected to be equal to or higher than about 0.9, it is desirable to set the number of divisions to nine or more. In particular, if the center luminous intensity ratio is selected to be equal to or higher than about 0. 95, it is desirable to set the number of divisions to twelve or more. On the other hand, as shown in FIG. 5(b), it is desirable to set the number of divisions to twenty-four or less at which a color temperature difference tends to decrease. In particular, if the number of divisions is selected such that the color temperature difference is smaller than 200 K, it is desirable to set the number of divisions to eighteen or less. Therefore, by setting the number of divisions of the incident plane section 71 to nine or more and twenty-four or less, it is possible to effectively suppress color unevenness while securing the center luminous intensity.

The insulation cover 15 is formed in a cylindrical shape opening to one end side by an insulating material such as PBT resin. The insulation cover 15 integrally includes a cylindrical insulation-cover main body section 75 fit in the recess 26 of the base body 12 and a power-supply section 76 continuous to the other end side of the insulation-cover main body section 75 and protruding from the recess 26 of the base body 12. An annular flange 77, which is in contact with the other end of the body section 21 of the base body 12, is formed in the outer circumference between the insulation-cover main body section 75 and the power-supply section 76. On the outer surface of the power-supply section 76, a pair of groove-like locking recesses 78 for locking to a socket is provided on both sides opposed to each other.

The power-supply terminal 16 can be connected to a socket for a general lighting bulb of a GU5.3 type or the like. The power-supply terminal 16 includes a pair of connection pins 81 protruding from the other end of the insulation cover 15.

The lighting circuit 17 is a circuit configured to supply a constant current to the LED chips 47 of the light-emitting module 13. The lighting circuit 17 includes a circuit board 83 on which a plurality of circuit elements configuring the circuit are mounted. The circuit board 83 is inserted along the axial direction of the insulation cover 15 and housed in the insulation cover 15 extending from the insulation-cover main body section 75 to the power-supply section 76. The connection pins 81 of the power-supply terminal 16 are respectively electrically connected to the input side of the lighting circuit 17. A lead wire having a not-shown connector at the tip is connected to the output side of the lighting circuit 17. The connector and the lead wire are drawn out to the mounting surface side of the substrate 41 through the wiring hole 32 and the through-hole 44 of the base body 12. The connector is connected to a connector of the light-emitting module 13.

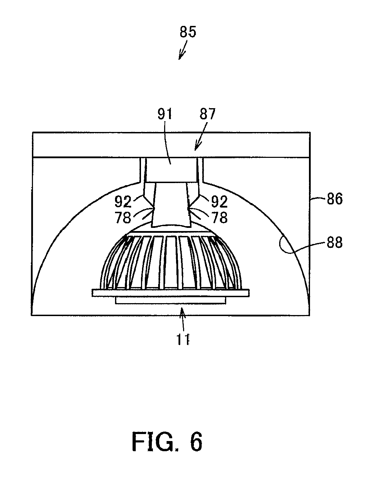

In FIG. 6, a lighting fixture 85, which is a downlight, including the lamp device 11 is shown. The lighting fixture 85 includes a fixture main body 86. A socket 87 and a reflector 88 are disposed in the fixture main body 86. The socket 87 includes a substantially columnar socket main body 91 including an insertion hole in which a not-shown contact is provided, the connection pins 81 of the power-supply terminal 16 of the lamp device 11 being inserted into the insertion hole and electrically connected to the contact, and holding springs 92 movably provided on both sides of the socket main body 91. The connection pins 81 are inserted into the insertion hole and electrically connected to the contact, whereby the holding springs 92 are fit in the locking recesses 78 and the lamp device 11 is held by the socket 87.

When the lamp device 11 is mounted on the socket 87 of the lighting fixture 85 and energized, the lighting circuit 17 operates, electric power is supplied to the LED chips 47 of the plurality of light-emitting sections 42 of the light-emitting module 13, the LED chip 47 emits light, the sealing resin 48 is excited by the light emission of the LED chip 47 and emits light from the light-emitting surface 49, and the light is made incident on the incident recess 56 of the lens 14. At this point, the light includes light L1 radially emitted from the LED chip 47 via the sealing resin 48 and light L2, a color temperature and illuminance of which are slightly different from the color temperature and the illuminance of the light L1, radially emitted from the sealing resin 48 (the circumferential edge section of the sealing resin 48) located around the LED chip 47 when the phosphor is excited by the light L1 of the LED chip 47 and emits light. In this embodiment, the light L1 has a color temperature relatively approximate to a color temperature of blue, which is a light emission color of the LED chip 47. The light L2 has a color temperature relatively approximate to a color temperature of yellow, which is a color of the phosphor in the sealing resin 48. Most of the light from the light-emitting surface 49 is made incident on the incident side surface 69 and the remainder is made incident on the lens surface 68.

The light made incident on the incident side surface 69 is refracted by the incident plane sections 71 forming the incident side surfaces 69 and substantially all the light is guided to the reflection surface 66. That is, since the incident plane sections 71 are respectively formed in a planar shape, light made incident on the incident plane sections 71 from directions other than the normal direction is refracted according to a refractive index of a member configuring the lens 14 (the lens main body section 55). Therefore, the light made incident on the respective incident plane section 71 is scattered according to an incident angle of the light. Consequently, the light L1 and the light L2 included in the light emitted from the light-emitting section 42 and having the color temperatures different from each other are effectively mixed and color unevenness and illuminance unevenness are suppressed. The light guided to the reflection surface 66 is totally reflected by the reflection surface 66 and emitted from the emission surface 64 of the emission section 61.

On the other hand, the light made incident on the lens surface 68 is refracted by the lens surface 68. All the light is guided to the emission section 61 and emitted from the emission surface 64.

Therefore, all the light emitted from the light-emitting section 42 is emitted from the emission surface 64 via the lens 14.

In this way, according to the first embodiment, it is possible to effectively diffuse the light emitted from the light-emitting section 42 with the planar incident plane section 71 configuring the incident side surface 69 of the incident recess 56 that guides the light emitted from the light-emitting section 42 to the reflection surface 66 of the light distribution section 62. It is possible to surely suppress color unevenness and illuminance unevenness of the light-emitting section 42 without spoiling efficiency and center luminous intensity.

In particular, if the incident side surface 69 is divided into nine or more and twenty-four or less incident plane sections 71, it is possible to effectively suppress color unevenness while securing center luminous intensity.

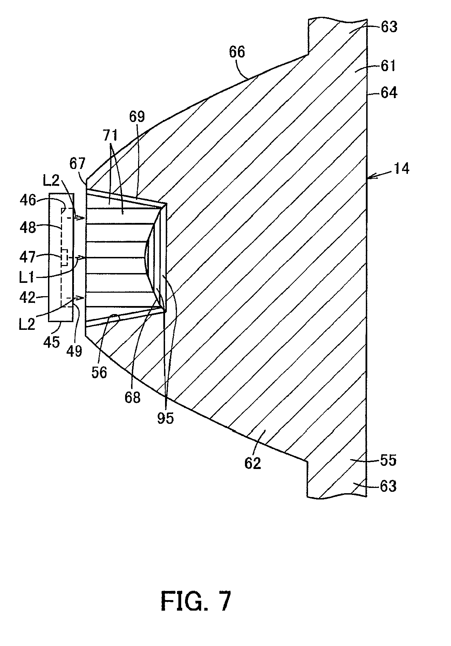

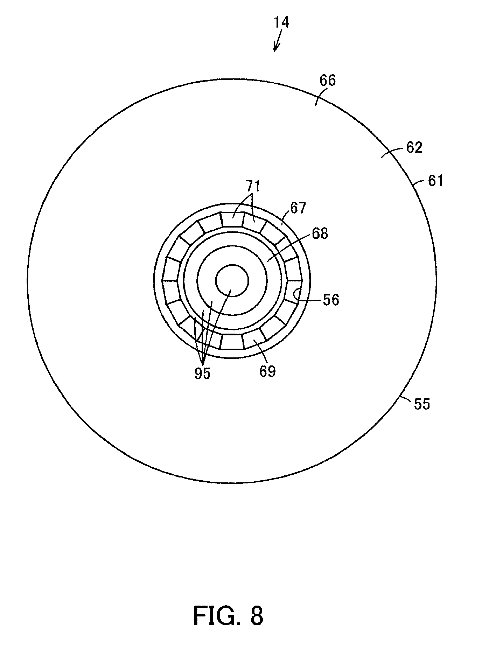

A second embodiment is explained with reference to FIGS. 7 and 8. Components and action same as the components and the action in the first embodiment are denoted by the same reference numerals and signs and explanation of the components and the action is omitted.

In the second embodiment, the lens surface 68 of the lens 14 in the first embodiment is configured by a plurality of facets, i.e., facet sections 95 adjacent to one another in the lamp axis direction.

The facet sections 95 form parts of conical surfaces (truncated conical surfaces), inclination angles of which are different from one another. Cross sections of the facet sections 95 are respectively linear. The entire lens surface 68 is formed in a shape approximate to a spherical surface. That is, continuous positions of the facet sections 95 adjacent to one another are respectively circles (latitude lines) located on the same spherical surface. In this embodiment, as shown in FIG. 8, the facet sections 95 are configured by four surfaces.

Light made incident on the lens surface 68 is refracted by the facet sections 95 forming the lens surface 68. All the light is guided to the emission surface 64 of the emission section 61. That is, since the facet sections 95 are formed in conical surface shapes, inclinations of which are different from one another, when viewed on a cross section including the lamp axis, lights made incident on the facet sections 95 from directions other than the normal direction are refracted according to a refractive index of a member configuring the lens 14 (the lens main body section 55). Therefore, the lights made incident on the respective facet sections 95 are scattered according to incident angles of the light. Consequently, the light L1 and the light L2, the color temperatures of which are different from each other, included in the light emitted from the light-emitting section 42 are effectively mixed. It is possible to surely suppress color unevenness and illuminance unevenness. The effect is particularly high if the facet sections 95 are divided into three or more surfaces and eight or less surfaces.

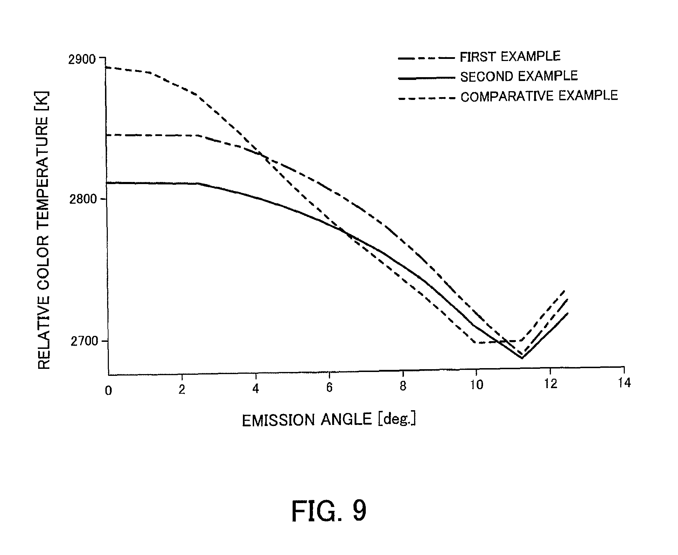

Specifically, a relation between emission angles by the lens 14 and relative color temperatures in the embodiments and a comparative example is simulated. As shown in FIG. 9, in a first example corresponding to the first embodiment and a second example corresponding to the second embodiment, relative color temperature differences at emission angles 0° to 10° are respectively about 100 to 150 K. On the other hand, in the comparative example, a relative color difference is equal to or higher than about 200 K. It is seen that, in the first example and the second example, color unevenness is suppressed and uniformity of colors is high compared with the comparative example. That is, it is most suitable that the incident recesses 56 are all configured by the facets (the incident plane sections 71 and the facet sections 95).

In the embodiments, besides the lamp device 11, the lens 14 can be applied to an arbitrary luminaire including the light-emitting module 13 and the lens 14.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A luminaire (11) comprising:
a light-emitting module (13) including:
a light source (42) including a light-emitting element (47) and a fluorescent section (48) configured to cover the light-emitting element (47) and excited by light emission from the light-emitting element (47); and
a substrate (41), on one surface of which the light source (42) is mounted; and
a lens (14) including:
a lens main body section (55) including an emission section (61) configured to emit light and a light distribution section (62) configuring a reflection surface (66), an outer surface of which reflects the light to the emission section (61), and provided integrally with the emission section (61), the lens main body section (55) being formed by a member having translucency; and
an incident recess (56) including a lens surface (68) opposed to the light source (42) and configured to guide light emitted from the light source (42) to the emission section (61) and an incident side surface (69) configured by a plurality of planar incident plane sections (71) located around the lens surface (68) and adj acent to one another and configured to guide the light emitted from the light source (42) to the reflection surface (66) of the light distribution section (62), the incident recess (56) being recessed in the light distribution section (62) of the lens main body section (55).

2. The luminaire (11) according to claim 1, wherein a number of the incident plane sections (71) is set to nine or more and twenty-four or less.

3. The luminaire (11) according to claim 1 or 2, wherein the incident side surface (69) is inclined at 80° or more and 90° or less with respect to a direction orthogonal to the optical axis direction.

4. The luminaire (11) according to any one of claims 1 to 3, wherein the lens surface (68) is configured by a plurality of facet sections (95) adjacent to one another in an optical axis direction.

5. The luminaire (11) according to claim 4, wherein a number of the facet sections (95) is set to three or more and eight or less.

6. The luminaire (11) according to any one of claims 1 to 5, wherein the light-emitting element (47) is an LED element.

7. A lamp device (11) comprising:
a base body (12);
the luminaire (11) according to any one of claims 1 to 6, the light-emitting module (13) of which is arranged on one end side of the base body (12);
an insulation cover (15) attached to the other end side of the base body (12);
a power-supply terminal (16) provided in the insulation cover (15); and
a lighting circuit (17) housed in the insulation cover (15).

8. A lens (14) comprising:
a lens main body section (55) including an emission section (61) configured to emit light and a light distribution section (62) configuring a reflection surface (66), an outer surface of which reflects the light to the emission section (61), and provided integrally with the emission section (61), the lens main body section (55) being formed by a member having translucency; and
an incident recess (56) including a lens surface (68) opposed to a light source (42) and configured to guide light emitted from the light source (42) to the emission section (61), the light source (42) including a light-emitting element (47) and a fluorescent section (48) configured to cover the light-emitting element (47) and excited by light emission from the light-emitting element (47), and an incident side surface (69) configured by a plurality of planar incident plane sections (71) located around the lens surface (68) and adjacent to one another and configured to guide the light emitted from the light source (42) to the reflection surface (66) of the light distribution section (62), the incident recess (56) being recessed in the light distribution section (62) of the lens main body section (55).
